# EUROPÄISCHE PATENTSCHRIFT

(11) **EP 1 345 748 B1**
(45) Veröffentlichungstag und Bekanntmachung des Hinweises auf die Patenterteilung: **04.08.2004**
(21) Anmeldenummer: 01959955.4
(22) Anmeldetag: 05.09.2001
(51) Int. Cl.: B29C 47/00, E04F 21/00, B29C 47/04

(54) **VERFAHREN UND VORRICHTUNG ZUR HERSTELLUNG VON KUNSTSTOFFPROFILEN**
METHOD AND DEVICE FOR PRODUCING PLASTIC PROFILES
PROCEDE ET DISPOSITIF POUR PRODUIRE DES PROFILES EN MATIERE PLASTIQUE

(30) Priorität: 05.09.2000 AT 64700 U
(43) Veröffentlichungstag der Anmeldung: 24.09.2003
(73) Patentinhaber: Technoplast Kunststofftechnik Gesellschaft m.b.H., 4563 Micheldorf (AT)
(72) Erfinder: SCHWAIGER, Meinhard, A-4040 Linz (AT); DORNINGER, Frank, A-4563 Micheldorf (AT)
(74) Vertreter: Babeluk, Michael, Dipl.-Ing.
(86) Internationale Anmeldenummer: PCT/AT2001/000279
(87) Internationale Veröffentlichungsnummer: WO 2002/020247

(56) Entgegenhaltungen:
- EP-A- 0 152 123
- DE-A- 3 405 512
- DE-A- 3 640 887
- DE-A- 19 625 209
- DE-C- 4 429 091
- GB-A- 1 334 565
- US-A- 4 092 394
- US-A- 4 690 862

## Beschreibung

Die Erfindung betrifft ein Verfahren nach dem Oberbegriff von Patentanspruch 1.

Derartige Kunststoffprofile werden u.a. in der Fensterindustrie zur Herstellung von Kunststofffensterrahmen, Fensterflügeln oder als sonstige Profile verwendet. Ein Kunststoffprofil kann beispielsweise aus einem harten Profilstrang als Grundkörper bestehen, welcher ein oder mehrere Dichtungsprofile (weiche Profilstränge) aufweist.

Bekannte und dem Stand der Technik entsprechende Vorrichtungen und Verfahren sind:
- Co-Extrusionsverfahren: in der Extrusionsdüse erfolgt die Verbindung des Hart-PVC-Profils mit dem Weich-PVC-Profil. Nachteilig ist dabei die aufwendige Extrusionsdüse und die Tatsache, dass nicht verwendbare Profile, wie sie etwa beim Anlauf einer Extrusionslinie in größeren Mengen entstehen, nicht rezykliert werden können, da kein einheitliches Material vorliegt und die Dichtung auch nicht vom Profil getrennt werden kann. Außerdem ist die Kühlung und Kalibrierung des mit der Dichtung versehenen Profils schwierig. Ferner ist die Produktion sehr unflexibel, da bei gleichen Grundprofil unterschiedliche Extrusionsdüsen erforderlich sind, wenn die Dichtprofile unterschiedlich sind.
- Post-Coextrusionsverfahren: die Verbindung der beiden Profilelemente erfolgt nach dem Erkalten des Hart-PVC-Profils mit dem in einer separaten Extrusionsdüse ausgeformten Weich-PVC-Profil oder dgl., wobei das Hart-PVC-Profil an der zu verschweißenden Stelle durch externe Wärmeeinbringung lokal auf Schweißtemperatur erwärmt wird, bis eine teigige Konsistenz erreicht wird, und wobei dann der aus einer zweiten Düse austretende Weich-PVC-Profilstrang mit Schmelzetemperatur direkt aufextudiert wird. Anschließend ist eine erneute Abkühlung des Profils mit z.B. einem Wasserbad erforderlich. Ein solches Verfahren ist beispielsweise in der EP 455 670 B beschrieben. Die Steuerung dieses Verfahrens ist schwierig, da es erforderlich ist, dass der Extruder für die Dichtung direkt auf das Hart-PVC-Profil gerichtet ist, um eine korrekte Verbindung zu gewährleisten. Die zusätzliche Energieeinbringung in das Hart-PVC-Profil führt zu Eigenspannungen und erhöht die Gefahr des Verziehens der Profile, was eine Beeinträchtigung der Qualität darstellt. Ein weiterer Nachteil ist der erhöhte Platzbedarf aufgrund der zusätzlichen Kühleinrichtung.
- Post-Coextrusionsverfahren durch Einextrudieren in eine Nut: die beiden Profilelemente werden miteinander verbunden, indem der Weich-PVC-Profilstrang in eine Aufnahmenut des erkalteten Hart-PVC-Profilstranges einextrudiert wird und anschließend in einer Kühlvorrichtung, z.B. einem Wasserbad, beide Profilstränge gemeinsam abgekühlt werden. Diese Verfahren setzt notwendigerweise eine Nut voraus, da nur durch eine formschlüssige Verbindung ein ausreichender Halt der Dichtung gegeben ist. Eine solche Lösung ist beispielsweise in der WO 88/03863 A offenbart.
- Mechanische Verbindungsverfahren durch z.B. "Einrollen" einer Weich-PVC-Dichtung in den kalten Hart-PVC-Profilstrang. Dabei wird die Dichtung von einer Vorratsrolle abgewickelt, was eine entsprechende Lagerhaltung voraussetzt und beim Wechsel der Rolle Schwierigkeiten bereitet. Eigenspannungen im Weich-PVC-Profilstrang infolge Dehnung beim Einrollen können weiters nach dem Ablängen der Profile zu Schrumpfungen führen, d.h. die Dichtungslänge ist kürzer als die Profillänge, was zu einer unzureichenden Dichtwirkung führt.

Aufgabe der vorliegenden Erfindung ist es, mit einer neuen Vorrichtung und einem neuen Verfahren eine kostengünstigere Alternative zur Herstellung von z.B. Profilen mit Dichtungen anzubieten, welche die angeführten Nachteile vermeiden.

Diese Aufgabe wird erfindungsgemäß durch ein Verfahren gemäß dem Oberbegriff von Patentanspruch 1 gelöst, wodurch die obigen Nachteile überwunden werden.

Wesentlich an der Erfindung ist, dass die beiden Profilstränge gleichzeitig, jedoch getrennt voneinander extrudiert werden und dass jeder Profilstrang vollständig abgekühlt wird, so dass insbesondere der harte Profilstrang formstabil ist. Da somit auch der weiche Profilstrang im kalten Zustand vorliegt, kann ein relativ hoher Druck angewendet werden, um die beiden Profile zu verbinden. Vorzugsweise dient eine geringfügige Energiezufuhr dazu, Eigenspannungen im weichen Profilstrang abzubauen.

In einer ersten besonders bevorzugten Ausführungsvariante der Erfindung ist vorgesehen, dass der harte Profilstrang und/oder der weiche Profilstrang nach der Abkühlung lokal erwärmt und unter Druck verschweißt werden. Durch die lokal begrenzte Erwärmung wird eine Deformation des harten Profilstranges vermieden, und außerdem ist die eingebrachte Wärmemenge so gering, dass im Allgemeinen ein Abkühlvorgang nach dem Verschweißen nicht erforderlich ist. Besonders günstig ist, die lokale Erwärmung des harten Profilstranges zu begrenzen, um zu verhindern, dass die Temperatur einen Grenzwert übersteigt, bei dem das Material erweicht wird. Dadurch kann trotz des Drucks, mit dem der weiche Profilstrang auf den harten Profilstrang aufgedrückt wird, verhindert werden, dass eine Materialverdrängung stattfindet.

In einer weiteren Ausführungsvariante der Erfindung wird der weiche Profilstrang in eine Nut des harten Profilstranges eingerollt. Die Verbindung der beiden Profilstränge erfolgt dabei primär reibschlüssig oder formschlüssig und erst in zweiter Linie durch Adhäsion. In diesem Zusammenhang hat es sich als besonders günstig herausgestellt, wenn das Einrollen des weichen Profilstrangs durch Walzen erfolgt, die durch ein Reibrad angetrieben werden, das auf dem harten Profilstrang abrollt. Auf diese Weise wird der Einrollvorgang regelungstechnisch völlig unabhängig von der Extrusionsgeschwindigkeit des harten Profilstranges, da die Walzen zum Einrollen von diesem selbst und nicht über einen Elektromotor oder dergleichen angetrieben werden. Eine solche bevorzugte Lösung ist erst mit der in Zusammenhang mit dem Verfahren gemäß Patentanspruch 1 möglich, da sie eine harte Oberfläche des harten Profilstranges voraussetzt.

Schrumpfungen der eingerollten Dichtung können in bevorzugter Weise dadurch vermieden werden, dass der weiche Profilstrang durch Walzen angetrieben wird, deren Umfangsgeschwindigkeit größer ist als die Vorschubgeschwindigkeit des harten Profilstrangs. Dadurch wird auch eine besonders gute Haftung des Dichtungsprofils erreicht.

Weiters betrifft die vorliegende Erfindung eine Extrusionsvorrichtung gemäß Patentanspruch 9. Weitere bevorzugte Ausführungsvarianten der erfindungsgemäßen Extrusionsvorrichtung sind in den Ansprüchen 10 bis 15 angegeben.

Es ist auch möglich beide Varianten zu kombinieren und das weiche Profil nach bzw. beim Einrollen in eine Nut des harten Profilstranges unter Druck zu verschweißen.

Die Erfindung wird im folgenden anhand von schematischen Zeichnungen näher erläutert.
- Fig. 1: zeigt eine erfindungsgemäße Extrusionsvorrichtung in einem Längsschnitt;
- Fig. 2a: einen Schnitt gemäß Linie II-II in Fig. 1;
- Fig. 2b: einen Schnitt entsprechend der Fig. 2 in einer geringfügig abgewandelten Ausführungsvariante;
- Fig. 3: einen Schnitt gemäß Linie III-III in Fig. 1;
- Fig. 3a und Fig. 3b: zwei Ausführungsvarianten von Kunststoffprofilen im Querschnitt;
- Fig. 4, 5 und 6: Details verschiedener Ausführungsvarianten der Erfindung jeweils in einer Draufsicht.

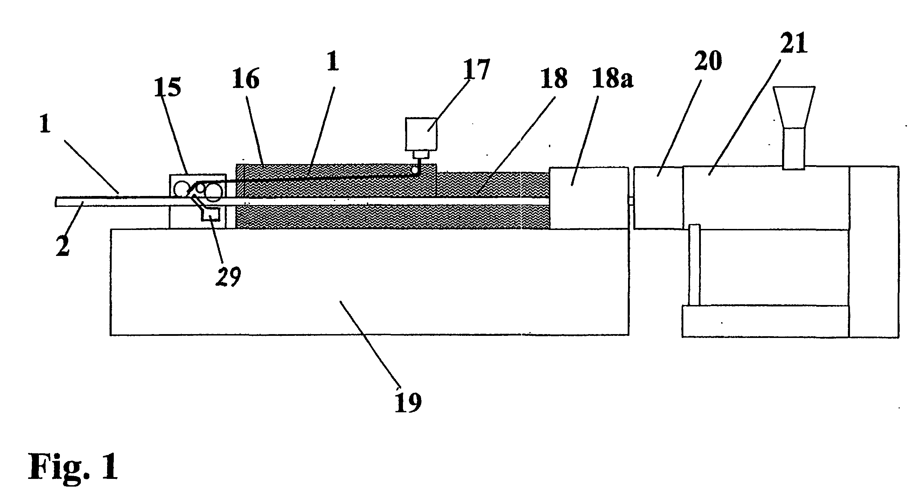

Die Extrusionsvorrichtung von Fig. 1 besteht aus einem Extruder 21 mit einer Extrusionsdüse 20, aus der der harte Profilstrang 2 extrudiert wird. Wie allgemein üblich wird der Profilstrang 2 durch eine oder mehrere Trockenkalibriereinrichtungen 18a geführt, um anschließend in einem Kühlbad 18 weiter abgekühlt zu werden. Üblicherweise ist ein solches Kühlbad 18 mit nicht dargestellten Kalibrierblenden ausgestattet.

Ein Koextruder 17 mit einer Extrusionsdüse 17a erzeugt gleichzeitig einen weichen Profilstrang 1, also beispielsweise ein Dichtungsprofil, der in einem separaten Kühlbad 16 gekühlt wird. Die beiden Profilstränge 1 und 2 werden in einer Verbindungseinrichtung 15 unter Anwendung von Druck verbunden, um ein einheitliches Profil zu ergeben. Wenn eine Verschweißung erfolgen soll, wird aus einer Heizeinrichtung 29 Warmluft auf die Verbindungsstelle der Profilstränge geblasen. Die Temperatur der Warmluft beträgt beispielsweise 180°C, wobei durch die Luftmenge die Erwärmung der beiden Profilstränge 1 und 2 so begrenzt wird, dass keine Erweichung erfolgt.

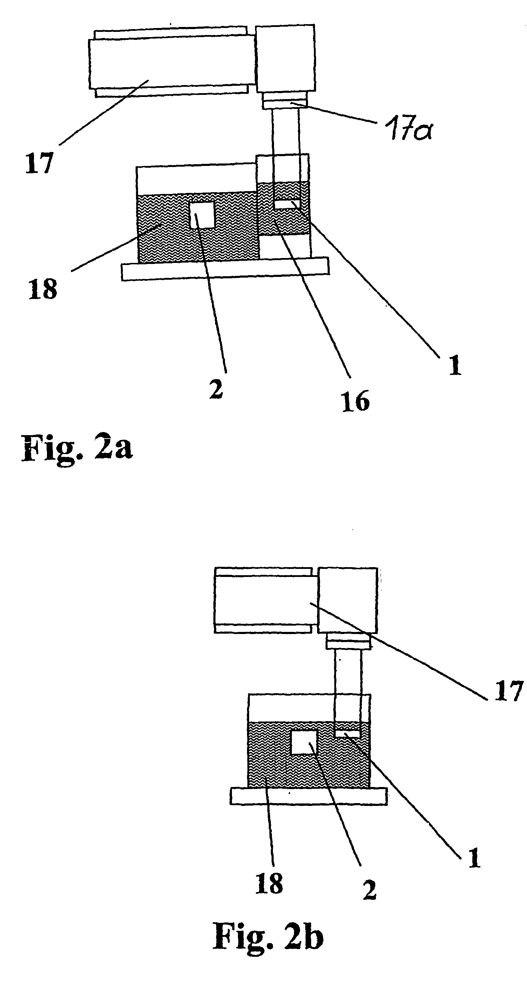

Wie aus der Fig. 2a ersichtlich ist, sind die Kühlbäder 16 und 18 für die Profilstränge 1 und 2 nebeneinander angeordnet.

Die Ausführungsvariante von Fig. 2b unterscheidet sich von der oben beschriebenen Ausführungsvariante lediglich dadurch, dass der weiche Profilstrang 1 im gleichen Kühlbad 18 abgekühlt wird, wie der harte Profilstrang 2.

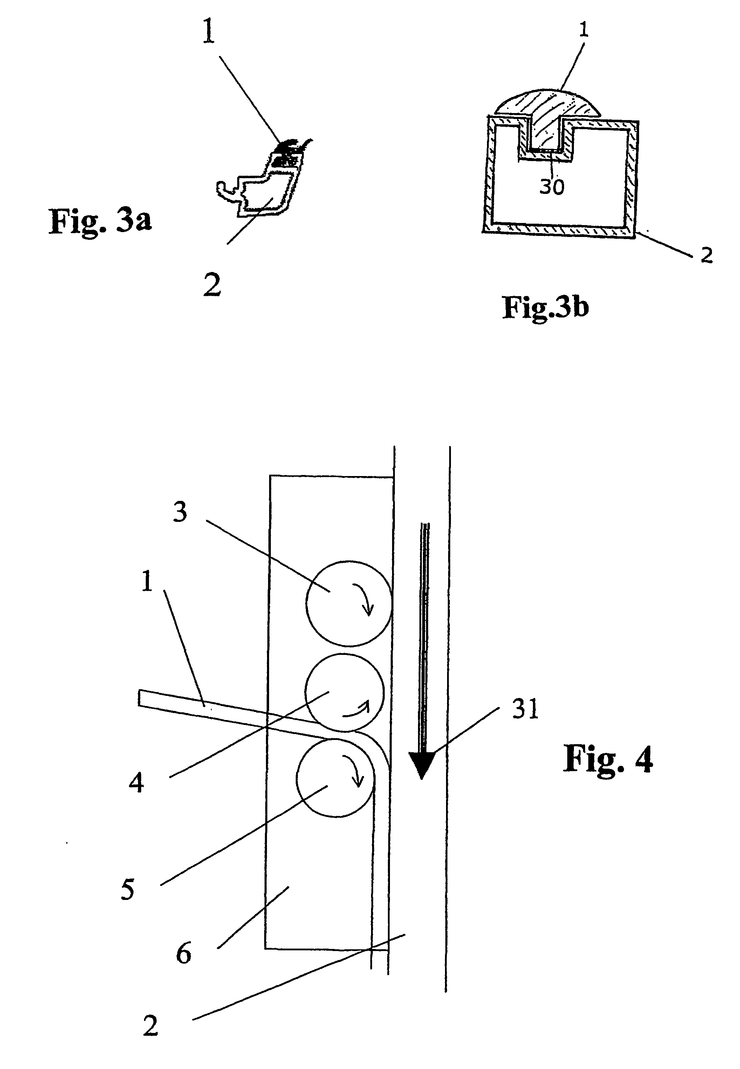

Die Fig. 3a zeigt ein Profil, das mit einer Ausführungsvariante des erfindungsgemäßen Verfahrens hergestellt worden ist. Es ist ersichtlich, dass der weiche Profilstrang 1 in eine innen erweiterte Nut des harten Profilstranges 2 eingepresst ist und so formschlüssig gehalten ist. Bei der Ausführungsvariante von Fig. 3b hingegen ist der weiche Profilstrang 1 mit dem harten Profilstrang 2 im Bereich 30 verschweißt. Die Verschweißung erfolgt oberflächlich, ohne dass sich der weiche Profilstrang 1 in die Wandung des harten Profilstranges 2 eindrückt.

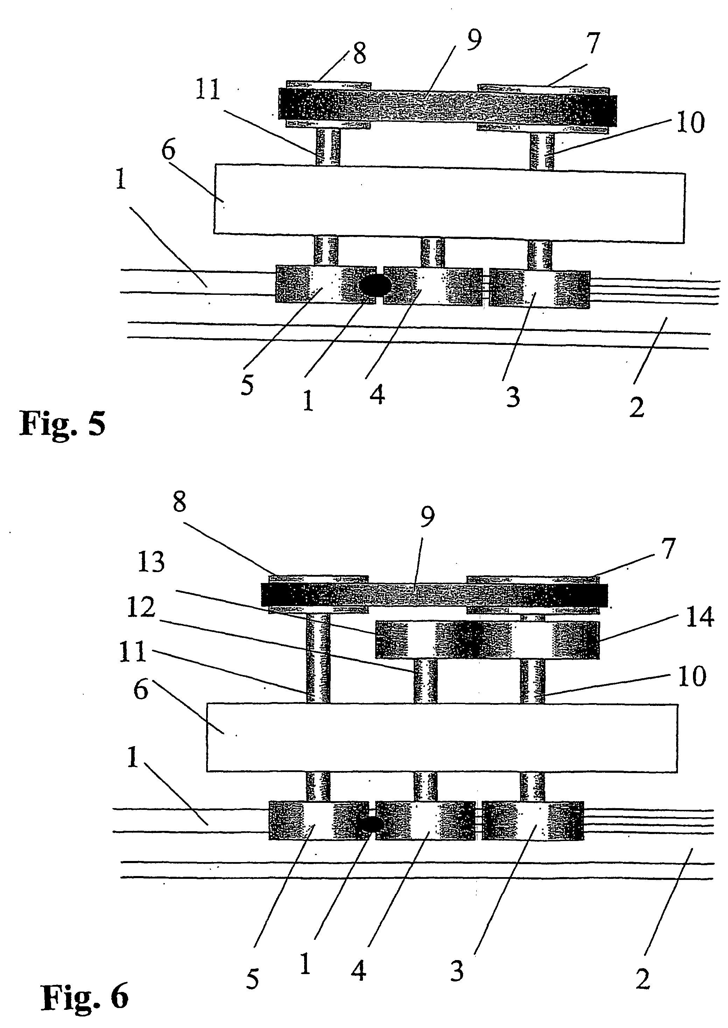

Aus der Fig. 4 ist der Aufbau einer erfindungsgemäßen Einrichtung zum Einrollen des weichen Profilstranges 1 in den harten Profilstrang 2 dargestellt. Der harte Profilstrang 2 wird dabei in der Richtung des Pfeils 31 mit einer vorbestimmten Geschwindigkeit bewegt, die auch als Extrusionsgeschwindigkeit bezeichnet wird. Der weiche Profilstrang 1 wird durch eine Einrollvorrichtung 6 mit dem harten Profilstrang 2 verbunden.

Die Einrollvorrichtung 6 besitzt ein Reibrad 3, das auf dem harten Profilstrang 2 aufliegt und von diesem angetrieben wird. Weiters sind ein Eindrückrad 5 und ein Förderrad 4 vorgesehen, die den weichen Profilstrang 1 führen und an den harten Profilstrang 2 anpressen. Bei einem Durchmesser des Eindrückrads 5 von 25 mm beträgt der Anpressdruck beispielsweise 20 N.

Bei der Ausführungsvariante von Fig. 5 ist mit dem Reibrad 3 über eine Welle 10 eine erste Riemenscheibe 7 verbunden. Eine weitere Riemenscheibe 8 ist über eine Welle 11 mit dem Eindrückrad 5 verbunden, und die beiden Riemenscheiben 7, 8 sind über einen Riemen 9 verbunden, der beispielsweise als Zahnriemen ausgebildet ist. Auf diese Weise wird sichergestellt, dass das Reibrad 3 das Eindrückrad 5 antreibt. Durch die Wahl der Abmessungen der einzelnen Bauteile und insbesondere durch die Wahl der Durchmesser der einzelnen Räder 3, 7, 8 und 5 wird sichergestellt, dass die Umfangsgeschwindigkeit des Eindrückrades 5 etwa 5% bis 10% größer ist, als die Vorschubgeschwindigkeit des harten Profilstranges 2. Auf diese Weise wird der weiche Profilstrang 1 beim Einrollen in Längsrichtung komprimiert und füllt die für ihn vorgesehene Nut unter Druck aus. Ein weiterer positiver Effekt dieser Maßnahme besteht darin, dass die Dichtungsprofile beim Schneiden der Profilstücke auf Gehrung geringfügig vorspringen, was bei der Fensterherstellung ein durchaus erwünschter Effekt ist. Das Förderrad 4 ist bei der Ausführungsvariante von Fig. 5 nicht angetrieben.

Die Ausführungsvariante von Fig. 6 unterscheidet sich von der Ausführungsvariante von Fig. 5 dadurch, dass auch das Förderrad 4 über Zahnräder 13, 14 und eine Welle 12 durch das Antriebsrad 3 angetrieben wird. Auf diese Weise kann ein höherer Druck aufgebaut werden, als bei der obigen Ausführungsvariante. Das Förderrad 4 dient somit nicht nur zur Lagestabilisierung, sondern auch zum Antrieb des Profilstranges 1. Es ist für den Fachmann offensichtlich, dass anstelle von Riementrieben oder Zahnrädern auch andere Getriebetypen einsetzbar sind und dass auch eine Ausführungsvariante denkbar ist, bei der das Förderrad 4 angetrieben ist, nicht jedoch das Eindrückrad 5.

## Patentansprüche

1. Verfahren zur Herstellung von Kunststoffprofilen bestehend aus zumindest einem harten Profilstrang (2), beispielsweise aus Hart-PVC, und zumindest einem weichen Profilstrang (1), beispielsweise aus Weich-PVC, wobei beide Profilstränge (1, 2) von separaten Extrusionsdüsen (20, 17a) gleichzeitig erzeugt und in einer Kühlvorrichtung (16, 18) abgekühlt werden, **dadurch gekennzeichnet, dass** der weiche Profilstrang (1) direkt aus dem Extruder (17) in ein Kühlbad (16, 18) geführt wird, in dem er vollständig abgekühlt wird und dass der harte Profilstrang (2) und der weiche Profilstrang (1) danach unter Druck verbunden werden.

2. Verfahren nach Anspruch 1, **dadurch gekennzeichnet, dass** beim weichen Profilstrang (1) vor und/oder während des Zusammenfügens mit dem erkalteten harten Profilstrang (2) durch eine geringfügige Energiezufuhr Eigenspannungen im Profilstrang (1) abgebaut werden.

3. Verfahren nach einem der Ansprüche 1 bis 2, **dadurch gekennzeichnet, dass** der harte Profilstrang (2) und/oder der weiche Profilstrang (1) nach der Abkühlung lokal erwärmt und unter Druck verschweißt werden.

4. Verfahren nach Anspruch 2 oder 3, **dadurch gekennzeichnet, dass** die geringfügige Energiezufuhr bzw. lokale Erwärmung mittels IR-Strahlung, elektrischem Heizstrahler oder Heißluft erfolgt.

5. Verfahren nach einem der Ansprüche 2 bis 4, **dadurch gekennzeichnet, dass** die lokale Erwärmung des harten Profilstrangs (2) begrenzt wird, um eine Erweichung zu verhindern.

6. Verfahren nach einem der Ansprüche 1 bis 5, **dadurch gekennzeichnet, dass** der weiche Profilstrang (1) in eine Nut des harten Profilstrangs (2) eingerollt wird.

7. Verfahren nach Anspruch 6, **dadurch gekennzeichnet, dass** das Einrollen des weichen Profilstrangs (1) durch Walzen oder Räder (4, 5) erfolgt, die durch ein Reibrad (3) angetrieben werden, das auf dem harten Profilstrang (2) abrollt.

8. Verfahren nach einem der Ansprüche 6 bis 7, **dadurch gekennzeichnet, dass** der weiche Profilstrang (1) durch Walzen oder Räder (4, 5) angetrieben wird, deren Umfangsgeschwindigkeit größer als die Vorschubgeschwindigkeit des harten Profilstrangs (2) ist.

9. Extrusionsvorrichtung zur Herstellung von Kunststoffprofilen (11), bestehend aus zumindest einem harten Profilstrang (2), beispielsweise aus Hart-PVC, und zumindest einem weichen Profilstrang (1), beispielsweise aus Weich-PVC, mit separaten Extrusionsdüsen (20, 17a) zur Erzeugung zumindest eines harten Profilstranges (2) und zumindest eines weichen Profilstranges (1), sowie eine Verbindungseinrichtung, in der der harte Profilstrang (2) mit dem weichen Profilstrang (1) unter Anwendung von Druck verbunden wird, **dadurch gekennzeichnet, dass** ein gemeinsames Kühlbad (18) oder pro Profilstrang (1, 2) separate Kühlbäder (16, 18) vorgesehen sind.

10. Extrusionsvorrichtung nach Anspruch 9, **dadurch gekennzeichnet, dass** eine Anpresseinrichtung (6) zum Anpressen des weichen Profilstrangs (1) an den harten Profilstrang (2) vorgesehen ist.

11. Extrusionsvorrichtung nach Anspruch 9 oder 10, **dadurch gekennzeichnet, dass** in Extrusionsrichtung nach dem Kühlbad (16, 18) für den weichen Profilstrang (1) eine Heizeinrichtung (29) für den weichen Profilstrang (1) angeordnet ist.

12. Extrusionsvorrichtung nach Anspruch 11, **dadurch gekennzeichnet, dass** die Heizeinrichtung (29) als Heißluftgebläse ausgebildet ist.

13. Extrusionsvorrichtung nach Anspruch 9 bis 12, **dadurch gekennzeichnet, dass** die Anpresseinrichtung als Einrollvorrichtung (6) zum Einrollen des weichen Profilstranges (1) in eine Ausnehmung oder Nut des harten Profilstranges (2) ausgebildet ist.

14. Extrusionsvorrichtung nach Anspruch 13, **dadurch gekennzeichnet, dass** die Einrollvorrichtung ein Reibrad (3) aufweist, das auf den harten Profilstrang (2) gedrückt wird und von diesem angetrieben ist, und dass das Reibrad (3) mindestens eine Rolle (4, 5) zum Einrollen des weichen Profilstranges (1) in die Ausnehmung oder Nut des harten Profilstranges (2) antreibt.

15. Extrusionsvorrichtung nach Anspruch 13 oder 14, **dadurch gekennzeichnet, dass** die Einrollvorrichtung (6) Rollen (4, 5) aufweist, die mit einer Umfangsgeschwindigkeit angetrieben sind, die größer ist als die Vorschubgeschwindigkeit des harten Profilstranges (2).

## Claims

1. A method for producing plastic profiles comprised of at least one hard profile strand (2), consisting of hard PVC for example, and at least one soft profile strand (1), consisting of soft PVC for example, with both profile strands (1, 2) being produced simultaneously by separate extrusion dies (20, 17a) and being cooled in a cooling apparatus (16, 18), **characterized in that** the soft profile strand (1) is led directly from the extruder (17) into a cooling bath (16, 18) in which it is cooled off completely and that the hard profile strand (2) and the soft profile strand (1) are subsequently joined under pressure.

2. A method as claimed in claim 1, **characterized in that** in the soft profile strand (1) internal stresses in the profile strand (1) are reduced before and/or during the joining with the cooled hard profile strand (2) by a slight supply of energy.

3. A method as claimed in one of the claims 1 to 2, **characterized in that** the hard profile strand (2) and/or the soft profile strand (1) are locally heated after the cooling and are welded together under pressure.

4. A method as claimed in claim 2 or 3, **characterized in that** the slight supply of energy or local heating occurs by means of infrared radiation, electric radiant heater or hot air.

5. A method as claimed in one of the claims 2 to 4, **characterized in that** the local heating of the hard profile strand (2) is limited in order to prevent any softening.

6. A method as claimed in one of the claims 1 to 5, **characterized in that** the soft profile strand (1) is rolled into a groove of the hard profile strand.

7. A method as claimed in claim 6, **characterized in that** the rolling in of the soft profile strand (1) occurs by rollers or wheels (4, 5) which are driven by a frictional wheel (3) which rolls off on the hard profile strand (2).

8. A method as claimed in one of the claims 6 to 7, **characterized in that** the soft profile strand (1) is driven by rollers or wheels (4, 5) whose circumferential speed is higher than the rate of feed of the hard profile strand (2).

9. An extrusion apparatus for producing plastic profiles (11), consisting of at least one hard profile strand (2), e.g. of hard PVC for example, and at least one soft profile strand (1), e.g. of soft PVC for example, with separate extrusion dies (20, 17a) for producing at least one hard profile strand (2) and at least one soft profile strand (1) as well as a joining device in which the hard profile strand (2) is joined with the soft profile strand (1) by using pressure, **characterized in that** a common cooling bath (18) or separate cooling baths (16, 18) for each profile strand (1, 2) are provided.

10. An extrusion apparatus as claimed in claim 9, **characterized in that** a pressing device (6) is provided for the purpose of pressing the soft profile strand (1) towards the hard profile strand (2).

11. An extrusion apparatus as claimed in claim 9 or 10, **characterized in that** a heating device (29) for the soft profile strand (1) is arranged in the direction of extrusion after the cooling bath (16, 18) for the soft profile strand (1).

12. An extrusion apparatus as claimed in claim 11, **characterized in that** the heating device (29) is arranged as a hot air blower.

13. An extrusion apparatus as claimed in claim 9 to 12, **characterized in that** the pressing device is arranged as a rolling apparatus (6) for rolling the soft profile strand (1) into a recess or groove of the hard profile strand (2).

14. An extrusion apparatus as claimed in claim 13, **characterized in that** the rolling apparatus comprises a frictional wheel (3) which is pressed onto the hard profile strand (2) and is driven by the same and that the frictional wheel (3) drives at least one roller (4, 5) for rolling the soft profile strand (1) into the recess or groove of the hard profile strand (2).

15. An extrusion apparatus as claimed in claim 13 or 14, **characterized in that** the rolling apparatus (6) comprises rollers (4, 5) which are driven at a circumferential speed which is higher than the rate of feed of the hard profile strand (2).

## Revendications

1. Procédé de fabrication de profilés en matière plastique, composé d'au moins une barre de profilé rigide (2), par exemple en PVC rigide, et d'au moins une barre de profilé souple (1), par exemple en PVC mou, les deux barres de profilé (1, 2) étant créées simultanément par des filières d'extrusion (20, 17a) séparées, et refroidies dans un dispositif de refroidissement (16, 18),
**caractérisé en ce que**
la barre de profilé souple (1) est guidée directement depuis l'extrudeuse (17) dans un bain de refroidissement (16, 18) dans lequel elle est entièrement refroidie, et la barre de profilé rigide (2) et la barre de profilé souple (1) sont ensuite assemblées sous pression.

2. Procédé selon la revendication 1,
**caractérisé en ce que**
dans le cas de barres de profilé (1) souples, des contraintes résiduelles dans la barre de profilé (1) sont résorbées avant et/ou pendant l'assemblage avec la barre de profilé rigide (2) refroidie, grâce à une faible alimentation en énergie.

3. Procédé selon l'une quelconque des revendications 1 à 2,
**caractérisé en ce que**
la barre de profilé rigide (2) et/ou la barre de profilé souple (1) sont localement chauffées et soudées sous pression après avoir été refroidies.

4. Procédé selon la revendication 2 ou 3,
**caractérisé en ce que**
la faible alimentation en énergie et l'échauffement local sont réalisés par rayonnement infrarouge, radiateur électrique ou air chaud.

5. Procédé selon l'une quelconque des revendications 2 à 4,
**caractérisé en ce que**
l'échauffement local de la barre de profilé rigide (2) est limité afin d'empêcher un ramollissement.

6. Procédé selon l'une quelconque des revendications 1 à 5,
**caractérisé en ce que**
la barre de profilé souple (1) est enroulée dans une rainure de la barre de profilé rigide (2).

7. Procédé selon la revendication 6,
**caractérisé en ce que**
l'enroulement de la barre de profilé souple (1) est réalisé par des rouleaux ou des roues (4, 5) entraînés par un galet de friction (3) qui se déroule sur la barre de profilé rigide (2).

8. Procédé selon l'une quelconque des revendications 6 à 7, **caractérisé en ce que**
la barre de profilé souple (1) est entraînée par des rouleaux ou des roues (4, 5) dont la vitesse périphérique est supérieure à la vitesse d'avance de la barre de profilé rigide (2).

9. Dispositif d'extrusion pour fabriquer des profilés en matière plastique (11), composé d'au moins une barre de profilé rigide (2), par exemple en PVC rigide, et d'au moins une barre de profilé souple (1), par exemple en PVC mou, avec des filières d'extrusion (20, 17a) séparées pour créer au moins une barre de profilé rigide (2) et au moins une barre de profilé souple (1), ainsi que d'un dispositif d'assemblage dans lequel la barre de profilé rigide (2) est assemblée à la barre de profilé souple (1) sous pression,
**caractérisé en ce qu'**
un bain de refroidissement commun (18) ou des bains de refroidissement séparés (16, 18) sont prévus pour chaque barre de profilé (1, 2).

10. Dispositif d'extrusion selon la revendication 9,
**caractérisé en ce qu'**
un dispositif de pressage (6) est prévu pour presser la barre de profilé souple (1) contre la barre de profilé rigide (2).

11. Dispositif d'extrusion selon la revendication 9 ou 10,
**caractérisé en ce qu'**
un dispositif de chauffage (29) pour la barre de profilé souple (1) est disposé dans le dispositif d'extrusion après le bain de refroidissement (16, 18) de la barre de profilé souple (1).

12. Dispositif d'extrusion selon la revendication 11,
**caractérisé en ce que**
le dispositif de chauffage (29) est formé comme un ventilateur à air chaud.

13. Dispositif d'extrusion selon les revendications 9 à 12,
**caractérisé en ce que**
le dispositif de pressage est formé comme un dispositif d'enroulement (6) pour enrouler la barre de profilé souple (1) dans un évidement ou une rainure de la barre de profilé rigide (2).

14. Dispositif d'extrusion selon la revendication 13,
**caractérisé en ce que**
le dispositif d'enroulement présente un galet à friction (3) qui est pressé sur la barre de profilé rigide (2) et est entraîné par celle-ci, et le galet de friction (3) entraîne au moins un rouleau (4, 5) pour enrouler la barre de profilé souple (1) dans l'évidement ou la rainure de la barre de profilé rigide (2).

15. Dispositif d'extrusion selon la revendication 13 ou 14,
**caractérisé en ce que**
le dispositif d'enroulement (6) présente des rouleaux (4, 5) entraînés avec une vitesse périphérique supérieure à la vitesse d'avance de la barre de profilé rigide (2).
